# EUROPEAN PATENT APPLICATION

(11) **EP 4 819 350 A2**
(43) Date of publication of application: **07.10.2026**
(21) Application number: 26198920.6
(22) Date of filing: 02.12.2022
(51) Int. Cl.: H01M 50/46

(54) **ELECTRODE ASSEMBLY COMPRISING CATHODE HAVING INSULATING COATING LAYER**

(30) Priority: 03.12.2021 KR 20210172152
(62) Document number(s) of the earlier application(s) in accordance with Art. 76 EPC: 22901861.9 / 4 273 995
(71) Applicant: LG Energy Solution, Ltd., Seoul 07335 (KR)
(72) Inventor: CHOI, Jin Woo, 34122 Daejeon (KR); CHOI, Eun Seok, 34122 Daejeon (KR)
(74) Representative: Plasseraud IP

(57) **Abstract**

The present disclosure relates to an electrode assembly including a cathode, an anode, and a separator interposed between the cathode and the anode,
wherein the cathode and the anode each have a flat portion where a thickness of an active material layer is constant and an inclined portion where a thickness of an active material layer decreases from the flat portion,
wherein an insulating coating layer is formed on the inclined portion of the cathode,
wherein the flat portion of the cathode has a porosity of 15 to 25%, and the inclined portions of the cathode each has a porosity of 20 to 30%.

## Description

### [TECHNICAL FIELD]

### Cross Citation with Related Application(s)

This application claims the benefit of Korean Patent Application No. 10-2021-0172152 filed on December 3, 2021 with the Korean Intellectual Property Office, the entire contents of which are incorporated herein by reference.

The present disclosure relates to an electrode assembly comprising a cathode having an insulating coating layer.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Also, in recent years, design of electronic devices has been acted very important elements in product selection by consumers, and the electronic devices have been gradually miniaturized and thinned according to the taste of consumers. For this purpose, there is a high necessity for miniaturizing and thinning a lithium secondary battery in order to minimize unnecessary waste of an internal space of each of the electronic devices. In addition, it is necessary for the lithium secondary battery to have various shapes corresponding to shapes of the electronic devices. In recent years, the demand for a curved battery, including a flexible battery, has increased.

Such a lithium secondary battery is manufactured by fabricating a cathode and an anode, stacking them together with a separator to form an electrode assembly, and incorporating the electrode assembly together with an electrolyte solution into a secondary battery case.

The electrode of the secondary battery is fabricated by applying an electrode active material slurry to the current collector, and is divided into a coating portion to which the slurry is applied and an non-coating portion to which the slurry is not applied, wherein depending on the coating of the electrode active material slurry, a sliding phenomenon appears in which both ends which are the boundary portion between the coating portion and the non-coating are coated in an inclined manner rather than being physically and perpendicularly coated by the concentration of the slurry or the like.

However, when such a sliding phenomenon appears, the inclined portion allows electrons to move from the current collector according to the charging current, so that lithium ions move from a cathode to an anode. However, the difference in the speed occurs so that the possibility of generation of the lithium precipitation is high, and the distance between the cathode and anode active materials is also farther than other portions, which causes a problem that resistance increases and cell performance deteriorates.

Moreover, since the inclined portion poorly rolls and thus, has a higher porosity than that of other portions, which increases the active material resistance.

Therefore, there is an urgent need to develop a secondary battery technology that can solve these problems.

### [DETAILED DESCRIPTION OF THE INVENTION]

### [Technical Problem]

It is an object of the present disclosure to provide a secondary battery in which the porosity of the inclined part is made similar to the porosity of the flat portion while preventing the inclined portion of the active material layer from participating in the reaction, thereby capable of solving the resistance unevenness to improve the performance of the secondary battery as a whole, and preventing problems such as lithium precipitation, thus securing the safety.

### [Technical Solution]

According to one embodiment of the present disclosure, there is provided an electrode assembly including a cathode, an anode, and a separator interposed between the cathode and the anode,
wherein the cathode and the anode each have a flat portion where a thickness of an active material layer is constant and an inclined portion where a thickness of an active material layer decreases from the flat portion,
wherein an insulating coating layer is formed on the inclined portion of the cathode,
wherein the flat portion of the cathode has a porosity of 15 to 25%, and the inclined portions of the cathode each has a porosity of 20 to 30%.

Wherein, the inclined portion may comprise a first section in which the thickness of the active material layer gradually decreases from a flat portion in an area close to the cathode tab in the extending direction of a cathode tab, or a second section in which the thickness of the active material layer gradually decreases from a flat portion in an area far from the first section and the cathode tab.

The insulating coating layer may comprise inorganic particles and a binder polymer, and specifically, the inorganic particles may comprise one or more types, and the binder polymers may comprise two or more types.

The inorganic particles may be a mixture of one or more types selected from the group consisting of SrTiO₃, SnO₂, CeO₂, MgO, NiO, CaO, ZnO, ZrO₂, Y₂O₃, Al₂O₃, TiO₂, and SiC.

The binder polymer may be a mixture of two or more types selected from the group consisting of butyl acrylate, styrene, acrylic acid, hydroethyl acrylate, carboxylmethylcellulose (CMC) and styrene-butadiene rubber (SBR).

Most specifically, the insulating coating layer may be composed of Al₂O₃, carboxylmethylcellulose (CMC) and styrene-butadiene rubber (SBR).

Such an insulating coating layer may be formed in a thickness corresponding to a thickness difference between the flat portion and the inclined portion so as to have a surface on the same line as the surface of the flat portion.

Further, the insulating coating layer may be formed so as to cover the entire inclined portion. Furthermore, the insulating coating layer may be formed so as to cover a portion of the cathode tab in an extending direction of the cathode tab. At this time, the insulating coating layer may be formed so as to cover 5% to 80% of the total length of the cathode tab.

Meanwhile, according to another embodiment of the present disclosure, there is provided a method for manufacturing an electrode assembly, the method comprising the steps of:
(a) applying a cathode slurry containing a cathode active material onto a cathode current collector and drying it;
(b) applying an insulating coating slurry to an inclined portion of the slurry where the thickness of the cathode slurry is gradually reduced, and drying it to prepare a preliminary cathode;
(c) rolling the preliminary cathode to fabricate a cathode in which a cathode active material layer formed on the cathode current collector; and
(d) stacking the cathode, an anode and a separator to manufacture an electrode assembly.

Wherein, the insulating coating slurry may be a slurry in which a mixture of one or more inorganic materials selected from the group consisting of SrTiO₃, SnO₂, CeO₂, MgO, NiO, CaO, ZnO, ZrO₂, Y₂O₃, Al₂O₃, TiO₂, and SiC and a mixture of two or more binders selected from the group consisting of butyl acrylate, styrene, acrylic acid, hydroethyl acrylate, carboxylmethylcellulose (CMC) and styrene-butadiene rubber (SBR) are mixed in the presence of a solvent.

Meanwhile, the rolling in step (b) may be performed such that the porosity of the flat portion where a thickness of an active material layer containing a cathode active material is constant is 15 to 25%.

According to yet another embodiment of the present disclosure, there is provided a lithium secondary battery in which the electrode assembly according to one embodiment of the present disclosure and an electrolyte solution are incorporated into a battery case.

### [BRIEF DESCRIPTION OF THE DRAWINGS]

Fig. 1 is a schematic cross-sectional view of a cathode according to one embodiment of the present disclosure;
Fig. 2 is a cross-sectional SEM image of an cathode according to Comparative Example 1 of the present disclosure and an SEM image enlarged so that the porosity in each area can be seen.
Fig. 3 is a graph showing a charging profile according to Experimental Example 2 of the present disclosure; and
Figs. 4 to 6 are graphs showing discharge profiles by C-rate according to Experimental Example 3 of the present disclosure.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present disclosure is not limited to the embodiments described below.

Hereinafter, the present disclosure will be described in detail with reference to the accompanying drawings. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

According to one embodiment of the present disclosure, there is provided an electrode assembly including a cathode, an anode, and a separator interposed between the cathode and the anode,
wherein the cathode and the anode each have a flat portion where a thickness of an active material layer is constant and an inclined portion where a thickness of an active material layer decreases from the flat portion,
wherein an insulating coating layer is formed on the inclined portion of the cathode,
wherein the flat portion of the cathode has a porosity of 15 to 25%, and the inclined portions of the cathode each has a porosity of 20 to 30%.

At this time, the inclined portion may comprise a first section in which the thickness of the active material layer gradually decreases from a flat portion in an area close to the cathode tab in the extending direction of a cathode tab, or a second section in which the thickness of the active material layer gradually decreases from a flat portion in an area far from the first section and the cathode tab.

That is, the inclined portion may be formed at one end where the tab is formed, or the inclined portion may be formed at both one end and the other end.

Meanwhile, the flat portion and the inclined portion of the active material layer of the present disclosure may have a similar porosity, wherein the flat portion of the cathode may have a porosity of 15 to 25%, and the inclined portion of the cathode may have a porosity of 20 to 30%, respectively.

Here, the porosity can be obtained as a percentage in which the packing density, which is obtained by dividing the weight of the active material layer per unit area of each corresponding portion of the cathode by the thickness of the active material layer, is divided by the density of the cathode slurry for preparing the active material layer, and then subtracted from 1.

That is, the porosity can be obtained by the following formula. [Formula] $\left(1-Density of cathode packing/Density of cathode slurry\right) \times 100$

If the porosity is too low outside the above range, intercalation and discharge of lithium ions are not smooth, and if the porosity is too high, the resistance of the active material increases, which is not preferable.

Further, the difference in porosity between the flat portion and the inclined portion may be within 10%, particularly within 5%. This will be explained below, but since the present disclosure proceeds with the rolling of the electrode after forming the insulating coating layer on these inclined portions, so that the porosity at each of these locations can be similarly matched. On the other hand, since the existing insulating tape or insulating layer formed on the tab is formed after fabricating the cathode, the porosity of the inclined portion and the porosity of the flat portion are not formed similarly. In this case, the effect intended by the present disclosure cannot be achieved.

Therefore, the insulating coating layer may be formed on the inclined portion at the position where the inclined portion is formed.

When the insulating coating layer is formed on the inclined portion in this way, lithium ions cannot move, so that the inclined portion does not participate in the intercalation and deintercalation of lithium ions according to charging and discharging of the lithium secondary battery.

Therefore, it is possible to solve the problem of lithium precipitation due to an increase in resistance as that movement distance of lithium ions increases in the inclined portion. As the rapid charging progresses, the problem becomes more serious, so the rapid charging characteristics of the lithium secondary battery can be improved.

At this time, the insulating coating layer may specifically include inorganic particles and a binder polymer, and specifically, the inorganic particles may include one or more types, and the binder polymer may include two or more types.

When the inorganic particles are included as described above, heat resistance can be improved, and the binder polymer is included which facilitates coating of the inclined portion. All are components that do not affect the operation of the battery, and can sufficiently perform the role of an insulating coating layer.

Here, the type of inorganic particles or binder polymer is not limited, and materials known in the art can be used as long as they are components that can be used in a lithium secondary battery, but specifically, the inorganic particles may be a mixture of one or more types selected from the group consisting of SrTiO₃, SnO₂, CeO₂, MgO, NiO, CaO, ZnO, ZrO₂, Y₂O₃, Al₂O₃, TiO₂, and SiC, and the binder polymer may be a mixture of two or more types selected from the group consisting of butyl acrylate, styrene, acrylic acid, hydroethyl acrylate, carboxylmethylcellulose (CMC) and styrene-butadiene rubber (SBR).

Although the inorganic particle and the binder polymer can include only one type, but in the case of a binder polymer, the inclusion of two or more types can improve adhesive force and fill insufficient performance portions, which is thus preferable.

The inorganic particles and the binder polymer may be mixed at a weight ratio of 1:10 to 1:1, and specifically 1:5 to 1:3.

If the content of the inorganic particles is too small, the heat resistance may decrease. Conversely, if the content is too high, the polymer content is too small and thus, the mechanical properties of the insulating coating layer are deteriorated due to the weakening of the adhesive force between the inorganic particles.

Further, the size of the inorganic particles is not limited, but it is preferably in the range of 0.01 to 10 µm, particularly 0.1 to 10 µm, in order to form an insulating coating layer having a uniform thickness and to have an appropriate porosity between the inorganic particles. If the size is less than 0.01 µm, the dispersibility is lowered, which make it difficult to adjust the physical properties of the insulating coating layer. If the size exceeds 10 µm, the thickness increases, the mechanical properties deteriorate, and the pore size is excessively large, so that it cannot sufficiently perform a role as an insulating layer, which is not preferable.

Considering various factors such as the above problems and secondary battery performance problems, the insulating coating layer may be composed of, most specifically, Al₂O₃, carboxymethylcellulose (CMC) and styrene-butadiene rubber (SBR).

In the case of the above combination, it is suitable to perform the role of the insulating layer while effectively exhibiting the effect intended by the present disclosure.

Meanwhile, such an insulating coating layer may be formed in a thickness corresponding to a thickness difference between the flat portion and the inclined portion so as to have a surface on the same line as the surface of the flat portion.

Therefore, since the insulating coating layer can fill an empty space of the inclined portion, the height of the flat portion and the inclined portion are made identical during the fabrication of the cathode, so that the load due to rolling acts similarly. Thus, a phenomenon can be blocked in advance in which the active material layer is not properly rolled during the rolling process according to the inclination, and the resistance of the active material is increased due to the imbalance of the porosity that appears by having a high porosity in comparison with the porosity of the flat portion, thereby capable of solving the secondary battery performance deterioration and safety problems caused by lithium precipitation caused by such an imbalance.

In order to further maximize such effects, the insulating coating layer may be formed so as to cover the entire inclined portion.

Furthermore, the insulating coating layer may be formed so as to cover a portion of the cathode tab in an extending direction of the cathode tab.

Therefore, it can be replaced by such an insulating coating layered without attaching a separate insulating tape on the tab for the cathode.

At this time, it is preferable that the insulating coating layer is sufficiently formed so as to replace the insulating tape that is generally formed on the tab. Specifically, the insulating coating layer may be formed so as to cover 5% to 80% of the total length of the cathode tab.

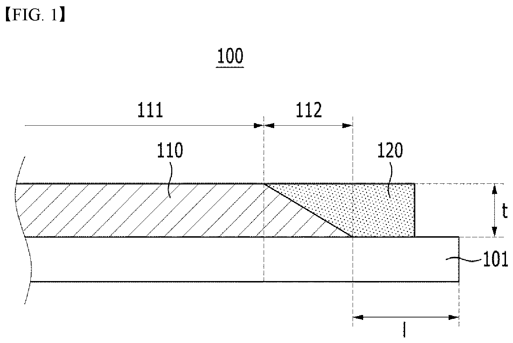

Specifically, referring to Fig. 1, a cross-sectional view of a cathode according to one embodiment of the present disclosure is schematically shown.

Referring to Fig. 1, the cathode 100 has a structure in which an active material layer 110 is formed on a current collector 101. At this time, the active material layer 110 has a flat portion 111 where a thickness is constant and an inclined portion 112 where its thickness decreases from the flat portion 111.

An insulating coating layer 120 is formed on the inclined portion 112. At this time, the insulating coating layer 120 is formed to have a thickness (t) corresponding to the thickness difference between the inclined portion 112 and the flat portion 111, so as to have the same height as the flat portion 111 of the active material layer 110, that is, to have a surface on the same line as the surface of the flat portion 111.

Further, the insulating coating layer 120 is formed so as to cover the entire inclined portion 112, and furthermore, it is formed so as to cover a portion of the cathode tab in the extending direction of the cathode tab.

At this time, it may be formed so as to cover 5% to 80% of the total length l of the cathode tab 102.

Meanwhile, according to another embodiment of the present disclosure, there is provided a method for manufacturing an electrode assembly, the method comprising the steps of:
(a) applying a cathode slurry containing a cathode active material onto a cathode current collector and drying it;
(b) applying an insulating coating slurry to an inclined portion of the slurry where the thickness of the cathode slurry is gradually reduced, and drying it to prepare a preliminary cathode;
(c) rolling the preliminary cathode to fabricate a cathode in which a cathode active material layer formed on the cathode current collector; and
(d) stacking the cathode, an anode and a separator to manufacture an electrode assembly.

At this time, as described above, the insulating coating slurry may be a slurry in which the inorganic particles and the binder polymer are mixed in the presence of a solvent so as to include the inorganic particles and the binder polymer. Specifically, the insulating coating slurry may be a slurry in which a mixture of one or more inorganic materials selected from the group consisting of SrTiO₃, SnO₂, CeO₂, MgO, NiO, CaO, ZnO, ZrO₂, Y₂O₃, Al₂O₃, TiO₂, and SiC and a mixture of two or more binders selected from the group consisting of butyl acrylate, styrene, acrylic acid, hydroethyl acrylate, carboxylmethylcellulose (CMC) and styrene-butadiene rubber (SBR) are mixed in the presence of a solvent.

More specifically, it can be obtained by mixing Al₂O₃, carboxylmethylcellulose (CMC), and styrene-butadiene rubber (SBR) in the presence of a solvent.

Other specific details are as described for the insulating coating layer.

The insulating coating slurry and the cathode slurry may be applied at the same time, or the insulating coating slurry may be applied after applying the cathode slurry.

They are then dried to volatilize the solvent of the cathode slurry and the solvent of the insulating coating slurry, so that the cathode slurry is formed as a cathode mixture and the insulating coating slurry is formed as an insulating coating layer.

Then, they are rolled at the same time. At this time, the rolling of step (b) may be performed so that the porosity of the flat portion where the thickness of the active material layer containing the cathode active material is constant is 15 to 25%.

When rolling is performed in this way, the porosity of the inclined portion can be 20 to 30%.

More specifically, the porosity difference between the flat portion and the inclined portion may be within 10%, particularly within 5%.

Conventionally, due to the influence of the viscosity of the cathode slurry or the like, the active material layer includes a flat portion and an inclined portion whose thickness is smaller than that of the flat portion, and the inclined portion does not receive as much load as the flat portion during rolling, so that the porosity of the inclined portion must be inevitably higher than that of the flat portion.

However, when the porosity increases in this way, the resistance of the active material increases in this portion, so that a large amount of resistance is applied, which causes problems such as lithium precipitation.

However, according to the present disclosure, since the insulating coating layer is formed on the inclined portion of the active material layer, the insulating coating layer is applied in a thickness similar to the height of the flat portion, followed by rolling at the same time. Therefore, the porosity of the inclined portion and the flat portion are similar, whereby the porosity deviation is not large, and problems such as resistance non-uniformity do not occur, which is thus preferred.

Conventionally, in the case of an insulating tape or insulating layer formed on a tab, an insulating tape or an insulating layer is usually formed after all active material layers are formed and rolled. Therefore, the difference in porosity between the flat portion and the inclined portion of the active material layer is still large, and the effect of the present disclosure cannot be obtained.

Meanwhile, since the present disclosure performs drying and rolling after such coating is completely performed, the porosity can be similarly matched.

Then, the cathode, the anode and the separator fabricated as described above are stacked to manufacture an electrode assembly.

At this time, specific components of other cathodes, anodes and separators and fabrication methods thereof are widely known in the art, and thus, descriptions thereof are omitted herein.

Meanwhile, according to another embodiment of the present disclosure, there is provided a lithium secondary battery in which the electrode assembly and the electrolyte solution are incorporated into a battery case.

Other components of the lithium secondary battery are widely known in the art, and thus, descriptions thereof are omitted herein.

### <Comparative Example 1>

LiCoO₂ as a cathode active material, carbon black as a conductive material and PVDF as a binder were mixed at a weight ratio of 97.6: 1.1:1.3 in N-methylpyrrolidone solvent to prepare a slurry for a cathode active material layer. Using a slot die, the slurry for the cathode active material layer was coated onto one surface of an aluminum (Al) thin film, which is a cathode current collector having a thickness of 10 µm, and dried under vacuum at 130°C for 2.5 hours to form an active material layer. The active material layer thus formed was rolled by a roll pressing method so that the porosity of the flat portion of the active material layer was 17%, to fabricate a cathode having an active material layer.

Here, the porosity can be obtained as a percentage in which the packing density, which is obtained by dividing the weight of the active material layer per unit area of the flat portion of the cathode by the thickness of the active material layer, is divided by the density of the cathode slurry for preparing the active material layer, and then subtracted from 1.

That is, the porosity can be obtained by the following formula. [Formula] $\left(1-cathode packing Density/Density of cathode slurry\right) \times 100$

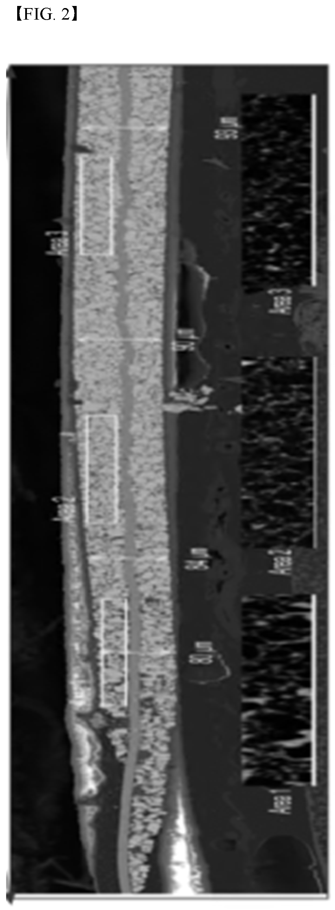

A cross section of the prepared cathode was taken with an SEM, and the results are shown in Fig. 2.

Referring to Fig. 2, it can be confirmed that the flat portions corresponding to Area2 and Area3 are well rolled and thus, the number of voids is not large in the active material, but the inclined portion corresponding to Area 1 is not well rolled, and occupies a portion with a large number of voids.

Therefore, it is expected that the cathode of Comparative Example 1 is subjected to a large amount of resistance at the inclined portion.

### <Example 1>

LiCoO₂ as a cathode active material, carbon black as a conductive material, and PVDF as a binder were mixed at a weight ratio of 97.6: 1.1:1.3 in N-methylpyrrolidone solvent to prepare a slurry for a cathode active material layer. Using a slot die, the slurry for the cathode active material layer was coated onto both surfaces of an aluminum (Al) thin film, which is a cathode current collector having a thickness of 10 µm

After that, Al₂O₃ (AES-11 available from SUMITOMO), carboxymethyl cellulose (CMC, BG-L01 available from LG CHEM), styrene-butadiene rubber (SBR, BM-L301 available from Zeon) were mixed at a weight ratio of 20:0.2:79.8, and the resulting mixture was dispersed in a solvent (DI-water) to prepare an insulating coating slurry. The insulating coating slurry was applied as shown in Fig. 1 so as to cover the inclined portion and the tab of the slurry for the cathode active material layer and 30% of the total length of the tab.

Then, drying was performed under vacuum at 130°C for 2.5 hours to form an active material layer and an insulating coating layer. The active material layer and the insulating coating layer thus formed were rolled by a roll pressing method so that the porosity of the flat portion of the active material layer was 17%, to fabricate a cathode having an active material layer. At this time, the porosity of the inclined portion was about 21%.

### <Example 2>

A cathode was fabricated in the same manner as in Example 1, except that in Example 1, the cathode having the active material layer was fabricated by rolling such that the porosity of the flat portion of the active material layer was 24%. At this time, the porosity of the inclined portion was about 28%.

### <Comparative Example 2>

A cathode was fabricated in the same manner as in Example 1, except that in Example 1, the cathode having the active material layer was fabricated by rolling such that the porosity of the flat portion of the active material layer was 30%. At this time, the porosity of the inclined portion was about 35%.

### <Experimental Example 1>

The active material resistance and interface resistance of the cathodes fabricated in Examples 1 to 2 and Comparative Example 2 were measured, respectively, and the results are shown in Table 1 below.

At this time, the active material resistance and interfacial resistance were measured by positioning probes inside and at the interface of each active material layer using Hioki RM2610 at room temperature.

The active material resistance and interfacial resistance can be obtained by inputting (a) a thickness of the electrode active material, (b) a thickness of the current collector (Al), and (c) a specific volume resistance of the current collector.

**[Table 1]**

| Cathode porosity | Surface resistance | |
|---|---|---|
| | Active material resistance (Ωcm) | Interfacial resistance (Ωcm²) |
| Example 1(17%) | 13.4 | 0.105 |
| Example 2(24%) | 14.2 | 0.140 |
| Comparative Example 2(30%) | 17.5 | 0.202 |

### <Experimental Example 2>

The cathodes fabricated in Example 1 and Comparative Example 2 were used.

A first anode was fabricated as follows.

Artificial graphite as an anode active material, a binder (mixture of SBR and CMC in a weight ratio of 2:1), and carbon black as a conductive material were mixed at a weight ratio of 96.4:0.5:3.1, and the resulting mixture and water as a dispersion medium were used to prepare a slurry for an active material layer in which the mixture and the dispersion medium were at a weight ratio of 1:2.

Using a slot die, the slurry for the active material layer was coated onto one surface of a copper (Cu) thin film which is an anode current collector with a thickness of 8 µm, and dried under vacuum at 130°C for 12 hours to form an active material layer. The active material layer thus formed was rolled by a roll pressing method so that the porosity of the flat portion of the active material layer was 28%, to fabricate a first anode having an active material layer.

A second anode was fabricated in the same manner as in the first anode, except that the porosity of the flat portion of the active material layer in the first anode was 36%.

A porous polyethylene separator was interposed between the cathodes and the first anode prepared as above to manufacture an electrode assembly, and the electrode assembly was positioned inside a case, and then an electrolyte solution was injected into the case to manufacture a first lithium secondary battery. (Cathode of Example 1 - First Anode: A-1, Cathode of Comparative Example 2 - First Anode: B-1)

A porous polyethylene separator was interposed between the cathodes and the second anode fabricated as above to manufacture an electrode assembly, and the electrode assembly was positioned inside a case, and then an electrolyte solution was injected into the case to manufacture a second lithium secondary battery. (Cathode of Example 1 - Second Anode: A-3, Cathode of Comparative Example 2 - Second Anode: B-3)

The electrolyte solution was prepared by dissolving lithium hexafluorophosphate (LiPF₆) at a concentration of 1.15M in an organic solvent composed of ethylene carbonate/dimethyl carbonate/ethyl methyl carbonate (mixed volume ratio of EC/DMC/EMC = 3/4/3).

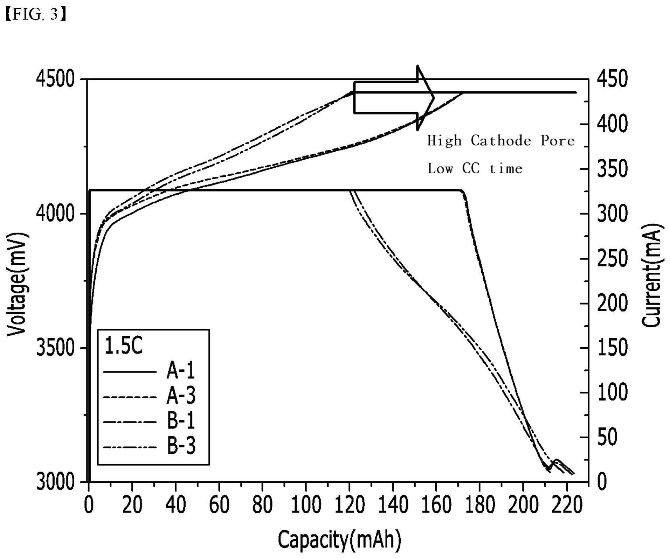

The four lithium secondary batteries prepared in each of the above were charged at 1.5C up to 4.35V/38mA under constant current / constant voltage (CC/CV) conditions at 25°C, and the charging graph is shown in Fig. 3 below.

Referring to Fig. 3, it can be confirmed that, when the porosity of the cathode is 30% or more even if applied according to the present disclosure, the CC charging time is shortened and the total charging time is increased. On the other hand, if not so, it can be confirmed that the charging time can be shortened.

### <Experimental Example 3>

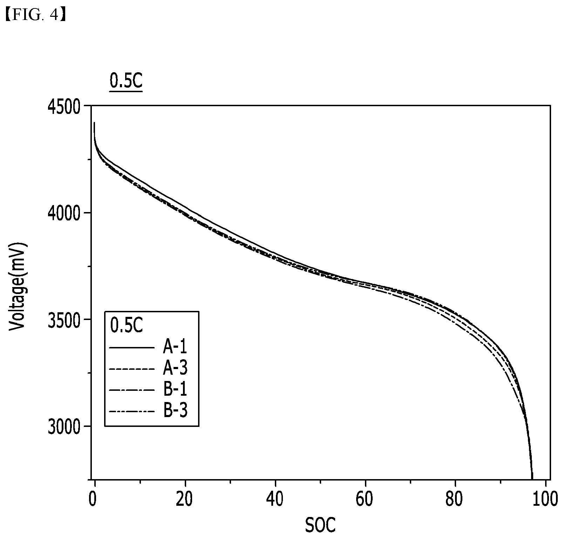

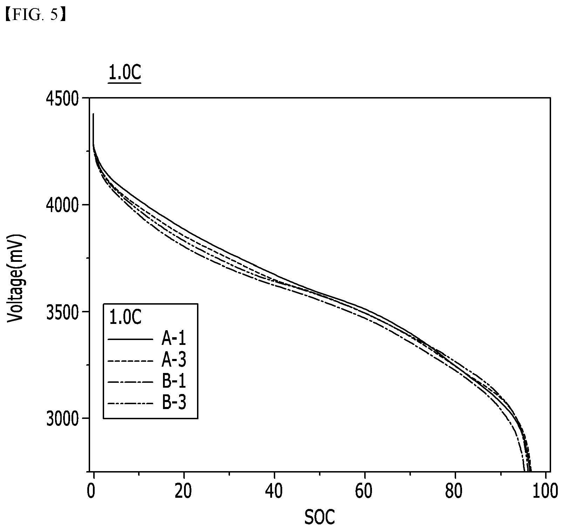

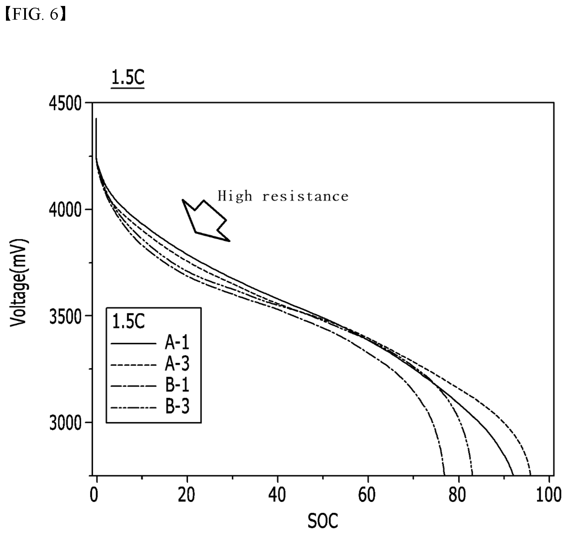

The four lithium secondary batteries(A-1, A-3, B-1, B-3) prepared in Experimental Example 2 were charged at 1.5C up to 4.35V/38mA under constant current/constant voltage (CC/CV) conditions at 25°C, and were discharged at each C-rate(0.5C, 1.0C, 1.5C), the results are shown in Figs. 4 to 6 below.

Referring to Figs. 4 to 6, it can be confirmed that when the porosity of the cathode is 30% or more, the discharge capacity is significantly reduced during rapid discharge when examining the discharge profile.

Although the exemplary embodiments of the present disclosure have been disclosed for illustrative purposes, those skilled in the art will appreciate that various modifications, additions and substitutions are possible, without departing from the scope and spirit of the invention as disclosed in the accompanying claims.

### [Industrial Applicability]

In the electrode assembly according to the disclosure, an insulating coating layer is formed on the inclined portion where the thickness of the positive electrode active material layer decreases, which prevents the inclined portion from participating in the reaction, thereby preventing the problem of resistance increase due to the distance difference acting on the inclined portion during rapid charging, preventing lithium precipitation in the corresponding portion, and thus improving the safety of the secondary battery including the same.

Moreover, since the rolling proceeds with the insulating coating layer formed on the inclined portion, no difference in porosity occurs between the inclined portion and the flat portion of the cathode, and the porosity of the active material layer on the inclined portion can be sufficiently reduced, thereby preventing porosity imbalance, sufficiently lowering the porosity, and reducing the active material resistance. Therefore, not only the rapid charging time of the secondary battery including the same can be shortened, but also other performances can be uniformly achieved.

Further embodiments are provided in the following items.

Item 1. An electrode assembly comprising a cathode, an anode, and a separator interposed between the cathode and the anode,
wherein the cathode and the anode each have a flat portion where a thickness of an active material layer is constant and an inclined portion where a thickness of an active material layer decreases from the flat portion,
wherein an insulating coating layer is formed on the inclined portion of the cathode,
wherein the flat portion of the cathode has a porosity of 15 to 25%, and the inclined portions of the cathode each has a porosity of 20 to 30%.

Item 2. The electrode assembly of item 1, wherein: the inclined portion of the cathode comprises a first section in which the thickness of the active material layer gradually decreases from a flat portion in an area close to the cathode tab in the extending direction of a cathode tab, or a second section in which the thickness of the active material layer gradually decreases from a flat portion in an area far from the first section and the cathode tab.

Item 3. The electrode assembly of item 1, wherein: the insulating coating layer comprises inorganic particles and a binder polymer.

Item 4. The electrode assembly of item 3, wherein: the inorganic particles comprise one or more types, and the binder polymers comprise two or more types.

Item 5. The electrode assembly of item 3, wherein: the inorganic particles are a mixture of one or more types selected from the group consisting of SrTiO₃, SnO₂, CeO₂, MgO, NiO, CaO, ZnO, ZrO₂, Y₂O₃, Al₂O₃, TiO₂, and SiC.

Item 6. The electrode assembly of item 3, wherein: the binder polymer is a mixture of two or more types selected from the group consisting of butyl acrylate, styrene, acrylic acid, hydroethyl acrylate, carboxylmethylcellulose (CMC) and styrene-butadiene rubber (SBR).

Item 7. The electrode assembly of item 1, wherein: the insulating coating layer is composed of Al₂O₃, carboxylmethylcellulose (CMC) and styrene-butadiene rubber (SBR).

Item 8. The electrode assembly of item 1, wherein: the insulating coating layer is formed in a thickness corresponding to a thickness difference between the flat portion and the inclined portion of the cathode so as to have a surface on the same line as the surface of the flat portion of the cathode.

Item 9. The electrode assembly of item 1, wherein: the insulating coating layer is formed so as to cover the entire inclined portion of the cathode.

Item 10. The electrode assembly of item 1, wherein: the insulating coating layer is formed so as to cover a portion of the cathode tab in an extending direction of the cathode tab.

Item 11. The electrode assembly of item 10, wherein: the insulating coating layer is formed so as to cover 5% to 80% of the total length of the cathode tab.

Item 12. A method for manufacturing an electrode assembly, the method comprising the steps of: (a) applying a cathode slurry containing a cathode active material onto a cathode current collector and drying it;
(b) applying an insulating coating slurry to an inclined portion of the slurry where the thickness of the cathode slurry is gradually reduced, and drying it to prepare a preliminary cathode;
(c) rolling the preliminary cathode to fabricate a cathode in which a cathode active material layer formed on the cathode current collector; and
(d) stacking the cathode, an anode and a separator to manufacture an electrode assembly.

Item 13. The method of item 12, wherein: the insulating coating slurry is a slurry in which a mixture of one or more inorganic materials selected from the group consisting of SrTiO₃, SnO₂, CeO₂, MgO, NiO, CaO, ZnO, ZrO₂, Y₂O₃, Al₂O₃, TiO₂, and SiC and a mixture of two or more binders selected from the group consisting of butyl acrylate, styrene, acrylic acid, hydroethyl acrylate, carboxylmethylcellulose (CMC) and styrene-butadiene rubber (SBR) are mixed in the presence of a solvent.

Item 14. The method of item 12, wherein: the rolling in step (b) is performed such that the porosity of the flat portion where a thickness of an active material layer containing a cathode active material is constant is 15 to 25%.

Item 15. A lithium secondary battery in which the electrode assembly of item 1 and an electrolyte solution are incorporated into a battery case.

## Claims

1. An electrode assembly comprising a cathode, an anode, and a separator interposed between the cathode and the anode,
wherein the cathode and the anode each have a flat portion (111) where a thickness of an active material layer is constant and an inclined portion (112) where a thickness of an active material layer decreases from the flat portion (111),
wherein an insulating coating layer (120) is formed on the inclined portion of the cathode,
a porosity of the flat portion (111) of the cathode and a porosity of the inclined portions (112) of the cathode have a different porosity within 10%.

2. The electrode assembly of claim 1, wherein:
the porosity of the flat portion (111) of the cathode is smaller than the porosity of the inclined portions (112) of the cathode.

3. The electrode assembly of claim 1, wherein:
the porosity of the flat portion (111) of the cathode and a porosity of the inclined portions (112) of the cathode have a different porosity within 5%.

4. The electrode assembly of claim 1, wherein:
the inclined portion (112) of the cathode comprises a first section in which the thickness of the active material layer gradually decreases from a flat portion (111) in an area close to the cathode tab in the extending direction of a cathode tab, or a first section and a second section in which the thickness of the active material layer gradually decreases from a flat portion (111) in an area far from the cathode tab.

5. The electrode assembly of claim 1, wherein:
the insulating coating layer (120) comprises inorganic particles and a binder polymer.

6. The electrode assembly of claim 5, wherein:
the inorganic particles comprise one or more types, and the binder polymers comprise two or more types.

7. The electrode assembly of claim 5, wherein:
the inorganic particles are a mixture of one or more types selected from the group consisting of SrTiO₃, SnO₂, CeO₂, MgO, NiO, CaO, ZnO, ZrO₂, Y₂O₃, Al₂O₃, TiO₂, and SiC.

8. The electrode assembly of claim 5, wherein:
the binder polymer is a mixture of two or more types selected from the group consisting of butyl acrylate, styrene, acrylic acid, hydroethyl acrylate, carboxylmethylcellulose (CMC) and styrene-butadiene rubber (SBR).

9. The electrode assembly of claim 1, wherein:
the flat portion (111) of the cathode has a porosity of 15 to 25%, and the inclined portions (112) of the cathode each has a porosity of 20 to 30%.

10. The electrode assembly of claim 1, wherein:
the insulating coating layer (120) is formed in a thickness corresponding to a thickness difference between the flat portion(111) and the inclined portion(112) of the cathode so as to have a surface on the same line as the surface of the flat portion(111) of the cathode.

11. The electrode assembly of claim 1, wherein:
the insulating coating layer (120) is formed so as to cover the entire inclined portion of the cathode.

12. A method for manufacturing an electrode assembly according claim 1, the method comprising the steps of:
(a) applying a cathode slurry containing a cathode active material onto a cathode current collector and drying it;
(b) applying an insulating coating slurry to an inclined portion of the slurry where the thickness of the cathode slurry is gradually reduced, and drying it to prepare a preliminary cathode;
(c) rolling the preliminary cathode to fabricate a cathode in which a cathode active material layer is formed on the cathode current collector; and
(d) stacking the cathode, an anode and a separator to manufacture an electrode assembly.

13. The method of claim 12, wherein:
the insulating coating slurry is a slurry in which a mixture of one or more inorganic materials selected from the group consisting of SrTiO₃, SnO₂, CeO₂, MgO, NiO, CaO, ZnO, ZrO₂, Y₂O₃, Al₂O₃, TiO₂, and SiC and a mixture of two or more binders selected from the group consisting of butyl acrylate, styrene, acrylic acid, hydroethyl acrylate, carboxylmethylcellulose (CMC) and styrene-butadiene rubber (SBR) are mixed in the presence of a solvent.

14. The method of claim 12, wherein:
the rolling in step (b) is performed such that the porosity of the flat portion where a thickness of an active material layer containing a cathode active material is constant is 15 to 25%.

15. A lithium secondary battery in which the electrode assembly of claim 1 and an electrolyte solution are incorporated into a battery case.
